# DEMANDE DE BREVET EUROPEEN

(11) **EP 0 821 202 A1**
(43) Date de publication de la demande: **28.01.1998**
(21) Numéro de dépôt: 97460028.0
(22) Date de dépôt: 23.07.1997
(51) Int. Cl.: F24D 3/14

(54) **Dalle d'isolation pour un plancher pourvu d'un dispositif de chauffage et/ou de rafraîchissement, procédé de fabrication d'une telle dalle et dispositif pour la mise en oeuvre de ce procédé**

(30) Priorité: 24.07.1996 FR 9609542
(71) Demandeur: Moreira-Miguel, Bernard, 49100 Angers (FR)
(72) Inventeur: Moreira-Miguel, Bernard, 49100 Angers (FR)
(74) Mandataire: Maillet, Alain

(57) **Abrégé**

La présente invention concerne une dalle d'isolation pour un plancher pourvu d'un dispositif de chauffage et/ou de rafraîchissement, un procédé de fabrication d'une telle dalle et un dispositif pour la mise en oeuvre de ce procédé.

La dalle d'isolation (1, 1') pour un plancher pourvu d'un dispositif de chauffage et/ou de rafraîchissement est destinée à assurer l'isolation thermique et acoustique dudit plancher, et elle est formée pour recevoir ledit dispositif.

De plus, elle est caractérisée en ce qu'elle est constituée d'au moins un panneau (2, 12, 22), ledit ou chaque panneau (2, 12, 22) étant élastifié.

## Description

La présente invention concerne une dalle d'isolation pour un plancher pourvu d'un dispositif de chauffage et/ou de rafraîchissement, un procédé de fabrication d'une telle dalle et un dispositif pour la mise en oeuvre de ce procédé. Plus précisément, l'invention se rapporte à l'isolation thermique et acoustique d'un tel plancher.

Les installations de planchers chauffants et/ou rafraîchissants comprennent ordinairement un plancher porteur en béton, une dalle isolante en polystyrène expansé posée sur ledit plancher porteur, une chape de béton coulée sur un dispositif chauffant et/ou rafraîchissant, lui-même posé sur ladite dalle d'isolation, et un revêtement de sol disposé sur ladite chape.

On connaît, par exemple par le document de brevet européen EP-A-473 057, une dalle d'isolation prévue pour être posée sur un plancher porteur.

Dans ce document, est décrite une dalle d'isolation constituée d'un panneau en matériau cellulaire. Le panneau est élastifié puis usiné afin de faire apparaître, sur l'une de ses faces, des rainures en queue d'aronde. Ces rainures sont prévues pour recevoir des plots permettant la fixation du dispositif chauffant et/ou rafraîchissant.

L'inconvénient de ce type de dalle est la complexité de leur fabrication et l'obligation d'utiliser des plots particuliers s'adaptant aux rainures en queue d'aronde.

De manière connue, on connaît une dalle d'isolation constituée de deux panneaux en polystyrène expansé qui sont solidarisés l'un avec l'autre en superposition. On pourra par exemple se référer au document de brevet français FR-A-2 717 519 pour la description d'une telle dalle.

Dans ce document, le premier panneau de ladite dalle, qui est destiné à être en contact avec la chape de béton, présente sur sa face prévue pour recevoir le dispositif chauffant et/ou rafraîchissant un réseau de plots pour le guidage et le blocage dudit dispositif au moment de sa pose. Ce panneau est caractérisé par une masse volumique au moins égale à 23 kg/m³ et, de préférence, supérieure à 28 kg/m³. Cette masse volumique élevée est prévue pour conférer à la fois audit premier panneau une conductivité thermique réduite, une bonne étanchéité, laquelle résulte de sa capillarité réduite, et une bonne résistance à la compression.

Le second panneau de ladite dalle, qui est prévu pour être en contact avec le plancher porteur, présente un profil plat sur ses deux faces. Il est caractérisé par une masse volumique inférieure à 15 kg/m³ et par le traitement d'élastification qui lui est appliqué avant sa solidarisation avec ledit premier panneau. Ce traitement consiste à comprimer ledit second panneau jusqu'à l'obtention d'un écrasement des deux tiers de son épaisseur initiale. L'élastification a pour but de diminuer la rigidité dynamique du matériau concerné, c'est-à-dire de le rendre plus élastique.

En effet, des études ont montré que l'ensemble chape de béton - dalle d'isolation peut être assimilé à un système oscillant masse - ressort, le plancher porteur constituant le support dudit ressort. Il s'est avéré que l'isolation acoustique contre les bruits d'impact est d'autant plus satisfaisante que la fréquence de résonance de ce système oscillant est moindre. Ceci peut être obtenu en réduisant le coefficient de compression du ressort précité, ou rigidité dynamique de la dalle d'isolation dans le langage de l'homme du métier. L'isolation acoustique contre les bruits d'impact dans un local d'habitation est donc accrue lorsque l'on augmente l'élasticité de la dalle d'isolation.

L'inconvénient de ce type de dalle d'isolation est que la plaque comportant les plots n'est pas élastifiée et, par conséquent, diminue les capacités d'isolation acoustique de la dalle.

Le but de la présente invention est de proposer une dalle d'isolation pour un plancher pourvu d'un dispositif de chauffage et/ou de rafraîchissement, ladite dalle étant destinée à assurer l'isolation thermique et acoustique dudit plancher et étant constituée d'au moins un panneau, l'un des panneaux comportant des plots prévus pour recevoir ledit dispositif de chauffage et/ou de rafraîchissement, qui soit obtenue par un procédé simple à mettre en oeuvre et, par conséquent, peu coûteux, tout en offrant une meilleure isolation.

A cet effet, ledit ou chaque panneau de la dalle d'isolation selon l'invention est élastifié.

De préférence, au moins la face de ladite dalle qui est formée pour recevoir ledit dispositif est en contact étroit avec un film imperméable isolant thermique la recouvrant.

Selon une autre caractéristique de l'invention, chaque plot présente une partie incurvée en contre-dépouille qui est prévue pour recevoir ledit dispositif de chauffage et/ou de rafraîchissement, lequel est destiné à être logé entre deux plots adjacents.

Selon une autre caractéristique de l'invention, chaque plot comporte des moyens pour pouvoir déformer vers sa partie interne ladite partie incurvée en contre-dépouille.

Selon une autre caractéristique de l'invention, lesdits moyens sont constitués d'au moins un évidemment par exemple deux rainures pratiquées de manière diamétrale sur la face supérieure de chaque plot.

Le procédé de fabrication d'une dalle d'isolation selon l'invention est tel qu'il consiste à mouler en un matériau thermoplastique alvéolaire, un panneau dont une face comporte lesdits plots, puis à soumettre ledit panneau à un traitement d'élastification par compression.

Selon une variante de réalisation, ledit procédé de fabrication consiste à mouler en un matériau thermoplastique alvéolaire, un premier panneau dont une face comporte lesdits plots, à mouler sur ledit premier panneau un second panneau constitué du même matériau que ledit premier panneau, puis à soumettre l'ensemble constitué par lesdits deux panneaux à un traitement d'élastification par compression.

De préférence, la première étape de moulage dudit panneau ou dudit premier panneau consiste à mouler ledit panneau ou ledit premier panneau sur un film thermoplastique, de telle manière que ledit film présente la forme de ladite face de la dalle qui est prévue pour recevoir ledit dispositif de chauffage et/ou de rafraîchissement.

Le dispositif de compression pour la mise en oeuvre dudit traitement d'élastification est constitué d'une presse comportant une matrice prévue pour comprimer ledit ou chaque panneau de la dalle, la partie active de ladite matrice présentant une forme complémentaire à celle de ladite face de la dalle qui est prévue pour recevoir ledit dispositif de chauffage et/ou de rafraîchissement.

Selon une variante de réalisation, ledit dispositif de compression comprend également une contre-presse comportant une contre-matrice prévue pour comprimer ledit ou chaque panneau de la dalle en même temps que ladite matrice, la partie active de ladite contre-matrice présentant une forme complémentaire à celle de la face de la dalle qui n'est pas prévue pour recevoir ledit dispositif de chauffage et/ou de rafraîchissement.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1a est une vue de dessus schématique de la dalle d'isolation selon l'invention,
la Fig. 1b est une vue de dessus et de détail d'un plot appartenant à la dalle représentée à la Fig. 1,
la Fig. 2 est une vue en coupe suivant le plan II-II de la Fig. 1 d'une dalle d'isolation selon un premier mode de réalisation de l'invention et d'un dispositif pour la mise en oeuvre du procédé de fabrication de ladite dalle, et
la Fig. 3 est une vue en coupe suivant le plan III-III de la Fig. 1 d'une dalle d'isolation selon un second mode de réalisation de l'invention et dudit dispositif pour la mise en oeuvre du procédé de fabrication de ladite dalle.

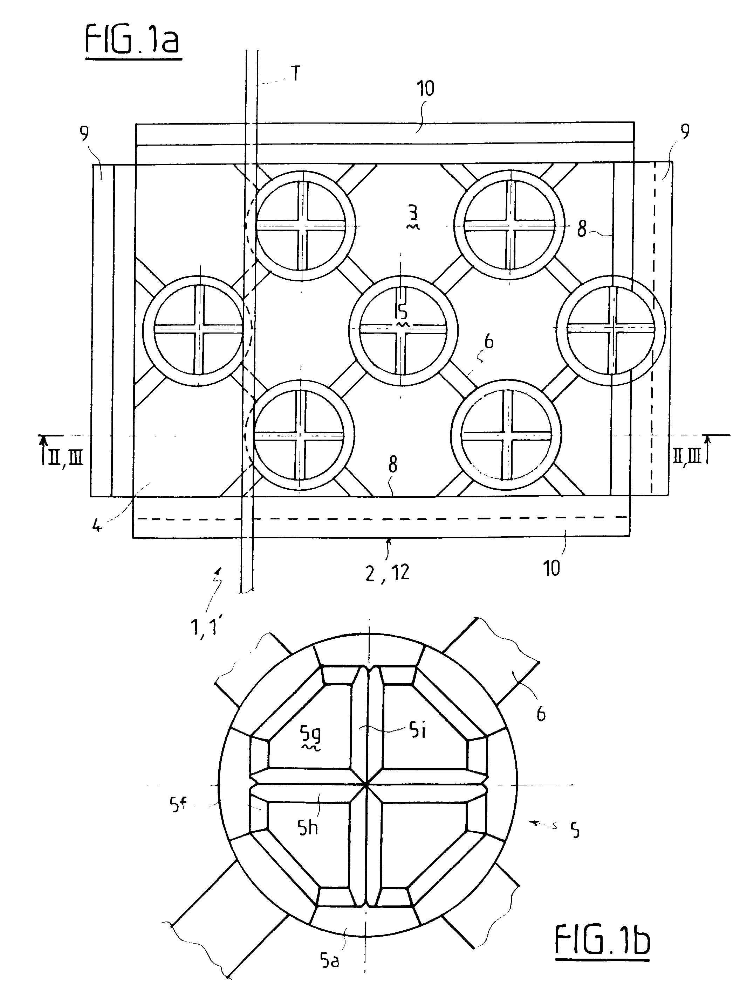

La dalle d'isolation 1 ou 1' représentée en vue de dessus à la Fig. 1a est prévue pour supporter un dispositif de chauffage et/ou de rafraîchissement du type serpentin, dont l'une des parties tubulaires rectilignes T est également représentée. De préférence, ledit serpentin est constitué d'un matériau caractérisé par un bon vieillissement, tel que du polyéthylène réticulé.

Elle est constituée d'au moins un panneau 2, 12, 22 rectangulaire en matériau thermoplastique alvéolaire, tel qu'un polystyrène expansé moulé (connu sous le nom de PSE-M par l'homme du métier). La face 3 de la dalle 1, 1' qui est prévue pour recevoir le dispositif de chauffage et/ou de rafraîchissement comporte à sa surface un film imperméable isolant thermique 4, par exemple en polymère thermoplastique tel que du polystyrène.

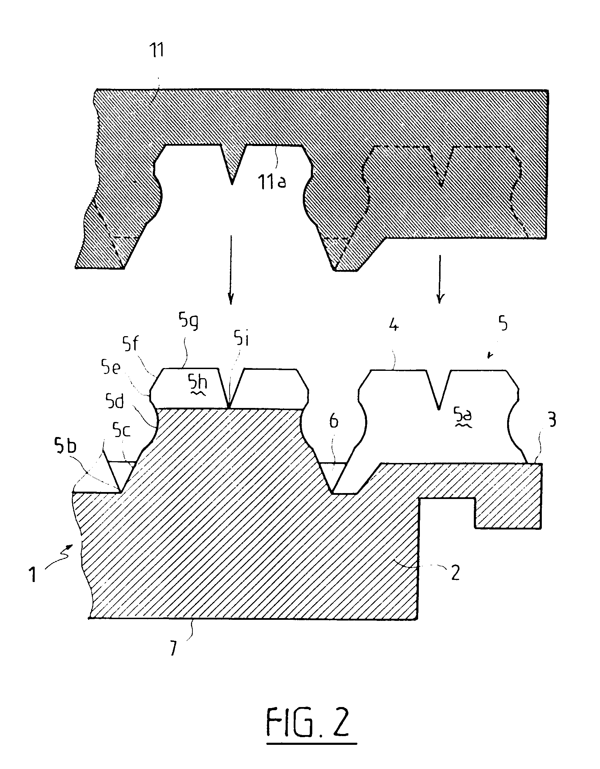

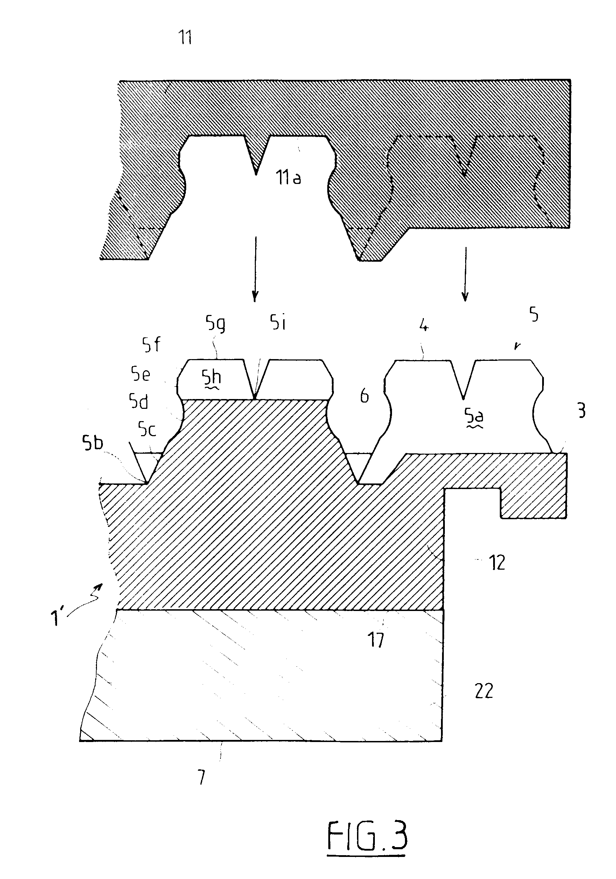

De plus, la dalle 1 ou 1' comporte sur ladite face 3 des plots 5 de guidage et de blocage dudit dispositif lors de sa pose qui sont disposés en quinconce et sont reliés entre eux et à leur base par des nervures 6. Lesdites nervures 6 forment des carrés, chaque carré possédant un côté en commun avec le carré qui lui est adjacent. Comme on peut le voir à la Fig. 1a, chaque partie rectiligne T du dispositif de chauffage et/ou de rafraîchissement est supportée par lesdites nervures 6 et est maintenue entre deux alignements adjacents de plots 5. Quant à la face inférieure 7 de ladite dalle 1 ou 1', elle peut présenter une forme plane, comme aux Figs. 2 et 3, ou bien un profil différent. Dans ce dernier cas, ladite face inférieure 7 pourra par exemple comporter des nervures, des rainures ou des picots.

On a représenté en médaillon à la Fig. 1b l'un desdits plots 5 en vue de dessus (chaque plot 5 a été symbolisé par un simple cylindre à la Fig. 1a pour des raisons de clarté). Chaque plot 5 présente une forme globalement tronconique, comme on peut le voir aux vues en coupe des Figs. 2 et 3.

Il apparaît sur ces dernières Figs. que la paroi latérale Sa de chaque plot 5 présente, à partir de la base 5b dudit plot 5, un tronçon linéaire 5c évasé vers ladite base 5b, lequel tronçon 5c se prolonge par une partie 5d incurvée vers l'extérieur de manière à former un angle de contre-dépouille pour le plot 5. Les parties incurvées 5d appartenant respectivement à deux plots 5 adjacents sont prévues pour épouser le contour de la partie rectiligne T posée entre lesdits plots 5, de manière à l'immobiliser. Ladite partie incurvée 5d se prolonge successivement par un tronçon linéaire 5e, perpendiculaire à ladite base 5b, et par un chanfrein 5f, dont le sommet délimite la face supérieure 5g de chaque plot 5.

Ladite face supérieure 5g de chaque plot 5 est parallèle à la base 5b de ce dernier et elle présente une forme globalement plane. Deux rainures 5h et 5i diamétrales et orthogonales sont pratiquées sur ladite face supérieure 5g, de telle sorte que leurs fonds respectifs se situent sensiblement au niveau du tronçon en contre-dépouille de ladite partie incurvée 5d. Lesdites rainures 5h et 5i sont prévues pour permettre à la partie incurvée 5d de chaque plot 5 de se déformer légèrement vers l'intérieur dudit plot 5 lors de l'opération de démoulage de la dalle 1 ou 1'.

On notera que les rainures 5h et 5i pourraient être remplacées par des évidements d'un autre type, dès lors qu'ils puissent remplir la même fonction que les rainures 5h et 5i.

Le film 4 est étroitement lié à ladite face 3 de la dalle 1 ou 1'. D'une part, il est prévu pour améliorer la résistance mécanique de ladite dalle 1 ou 1' vis-à-vis des contraintes qui lui sont imposées lors de la pose par le technicien dudit dispositif entre les plots 5 de la dalle 1, 1'. D'autre part, ledit film 4 est prévu pour empêcher toute infiltration lors du coulage ultérieur de la chape de béton, ladite infiltration étant susceptible de créer des ponts acoustiques dans la dalle 1, 1' et par conséquent de diminuer la qualité de son isolation.

La dalle 1 ou 1' comporte également en chacune de ses arêtes supérieures 8 des rebords ou rives 9 et 10, qui sont respectivement prévus pour la solidariser avec les dalles adjacentes. Les profils respectifs de deux desdits rebords 9 sont représentés aux Figs. 2 et 3.

On a représenté à la Fig. 2 une dalle d'isolation 1 correspondant à un premier mode de réalisation selon l'invention.

La dalle d'isolation 1 est constituée d'un panneau unique 2 en polystyrène expansé moulé, dont la face 3 prévue pour supporter le dispositif de chauffage et/ou de rafraîchissement est telle que celle qui vient d'être décrite. Elle est obtenue de la manière suivante.

On utilise dans un premier temps un film 4 constitué d'un matériau imperméable isolant thermique, par exemple un polymère thermoplastique tel que du polystyrène, que l'on soumet à un traitement de thermoformage, de telle manière qu'il puisse épouser au plus près le fond de la cavité d'un ensemble moule et contre-moule à injection, le fond de ladite cavité étant prévu pour former ladite face 3 de la dalle 1. On injecte ensuite, dans des conditions de température et de pression déterminées, des perles expansées de polystyrène dans ladite cavité, de manière à souder lesdites perles les unes sur les autres et sur ledit film 4. Après refroidissement dans ladite cavité, le film 4 et le panneau 2 sont en contact étroit l'un avec l'autre.

Il est à noter que la forme précitée des plots 5 est particulièrement bien adaptée pour permettre le démoulage de la dalle 1 dans de bonnes conditions. En effet, lorsqu'on commence à démouler ladite dalle 1, le blocage induit par le tronçon en contre-dépouille de chaque partie incurvée 5d disparaît sous l'effet de la légère déformation de celle-ci vers l'intérieur, qui est autorisée par les rainures 5h et 5i. Lors de la suite du mouvement de soulèvement du contre-moule, les parties de celui-ci qui sont respectivement complémentaires desdites parties incurvées 5d glisse sur les deux tronçons 5e et 5f de chaque plot 5.

Suite à l'opération de démoulage, chaque plot 5 est intact et reprend sa forme initiale, laquelle est prévue pour le logement et l'immobilisation ultérieurs des tubes T du dispositif de chauffage et/ou de rafraîchissement.

On remarquera que l'injection desdites perles expansées de polystyrène peut avoir lieu dans un autre moule que celui ayant servi au thermoformage du film 4.

Avantageusement, l'expansion des perles est telle que la masse volumique du polystyrène moulé est voisine de 15 kg/m³.

L'étape suivante du procédé de fabrication de la dalle 1 consiste à soumettre le panneau 2 moulé sur le film 4 à un traitement d'élastification. On utilise à cet effet une matrice 11 de presse hydraulique ou mécanique, prévue pour appliquer une force F sur ledit panneau 2 et qui est représentée schématiquement à la Fig. 2. Comme on peut le voir sur cette Fig., la partie active 11a de la matrice 11, c'est-à-dire sa face inférieure dans cet exemple de réalisation, présente une forme complémentaire à celle de la face supérieure 3 du panneau 2 recouvert du film 4. La matrice 11 est prévue pour comprimer le panneau 2 en exerçant une pression sur sa face supérieure et dans une direction perpendiculaire à celle-ci.

Ladite compression s'effectue jusqu'à un écrasement du panneau 2 sensiblement égal aux deux tiers de la distance comprise entre sa face inférieure 7 et la base 5b des plots 5, après quoi le panneau 2 est le siège d'une relaxation.

Ce traitement d'élastification a pour effet de plisser la surface des perles de polystyrène expansé par écrasement du panneau 2, ce qui se traduit par une réduction de la rigidité de la charpente en polystyrène et permet de mieux utiliser l'air emprisonné dans le panneau 2, ce dernier étant rendu plus élastique. De plus, ledit traitement est tel que les plots 5 ne présentent pas de déformation suite à la relaxation subséquente du panneau 2, leur hauteur n'étant pas modifiée pendant l'écrasement.

Par conséquent, ledit traitement permet de diminuer de manière importante la rigidité dynamique du panneau 2 et donc d'améliorer l'affaiblissement des bruits d'impact. La dalle 1 finalement obtenue conserve ainsi ses caractéristiques d'isolation acoustique.

On remarquera que l'opération de retrait de la matrice 11 de la presse est facilitée du fait de la structure évidée, par exemple rainurée, des plots 5, ledit retrait s'effectuant dans les mêmes conditions que le démoulage évoqué ci-dessus.

On remarquera également que la dalle 1 selon l'invention à la surface de laquelle sont formés les plots 5 n'a pas à être constituée d'un panneau 2 de masse volumique élevée, à l'instar du panneau supérieur des dalles d'isolation connues qui est surmonté de plots, ledit panneau supérieur étant prévu suffisamment dense pour posséder les qualités requises d'étanchéité et de robustesse, notamment. En effet, le film 4 qui recouvre la face supérieure 3 du panneau 2 présente les deux caractéristiques précitées, ce qui permet de se libérer de cette contrainte de densité élevée pour le panneau 2 comportant lesdits plots 5.

Il convient de noter que la masse volumique voisine de 15 kg/m³ qui caractérise le panneau 2 et la partie en contre-dépouille 5d que présentent les plots 5 dudit panneau 2 seraient susceptibles d'entraîner le déchirement desdits plots 5, lors de la pose du dispositif de chauffage et/ou de rafraîchissement par l'opérateur. C'est la raison pour laquelle on prévoit d'une part, des rainures 5h et 5i sur les plots 5 pour leur permettre de reprendre leur forme initiale après déformation et, d'autre part, un film 4 qui recouvre lesdits plots 5 pour les rigidifier et leur conférer une résistance aux efforts de compression satisfaisante. Ainsi, les plots 5 recouverts du film 4 ne se déforment pas suite au traitement d'élastification, malgré leur densité réduite.

On a représenté à la Fig. 3 une dalle d'isolation 1' correspondant à un second mode de réalisation de l'invention.

La dalle 1' est constituée d'un premier panneau 12 moulé, qui est recouvert d'un film 4 de protection conformément au premier mode de réalisation de l'invention, et d'un second panneau 22 également moulé mais de forme sensiblement plate et qui est solidarisé avec la face inférieure 17 dudit premier panneau 12 en superposition.

Ledit premier panneau moulé 12 se différencie du panneau 2 décrit dans le premier mode de réalisation par la valeur de sa masse volumique, qui est par exemple de l'ordre de 30 kg/m³. Sa face 3 qui est prévue pour recevoir le dispositif de chauffage et/ou de rafraîchissement présente la même géométrie que celle évoquée ci-dessus.

La dalle 1' est préférentiellement obtenue de la manière suivante.

On dispose d'abord le film 4 au fond de la cavité d'un moule à injection tel que celui qui vient d'être décrit, et l'on injecte des perles expansées de polystyrène sur ledit film 4 de manière à former ledit premier panneau 12, lequel est en contact étroit sur sa face 3 avec le film 4.

On interpose ensuite sur le rebord de la cavité préexistante du moule précité un élément de moulage connu par l'homme du métier sous le nom de cadre-entretoise, lequel est prévu pour augmenter la hauteur de ladite cavité. Puis on procède à l'injection de perles expansées de polystyrène dans ladite cavité, de manière à souder lesdites perles les unes sur les autres et sur ladite face 17 du premier panneau 12. Après refroidissement dans ledit moule, les deux panneaux 12 et 22 obtenus sont en contact étroit l'un avec l'autre (voir Fig. 3).

Comme pour le premier mode de réalisation de l'invention, on remarquera que l'opération de démoulage est facilitée par la structure évidée des plots 5.

A titre indicatif et nullement limitatif, l'expansion desdites perles peut être telle que la masse volumique du polystyrène moulé est voisine de 15 kg/m³.

L'étape suivante du procédé de fabrication de la dalle 1' consiste à soumettre l'ensemble des deux panneaux 12 et 22 à un traitement d'élastification. On utilise à cet effet une presse dont la matrice 11 identique à celle représentée à la Fig. 2. L'écrasement et la relaxation des panneaux 12 et 22 s'effectue de la manière précédemment décrite.

Ce traitement d'élastification a pour effet de plisser la surface des perles de polystyrène des deux panneaux 12 et 22, ce qui se traduit par une réduction de la rigidité de la charpente en polystyrène et permet de mieux utiliser l'air emprisonné dans les deux panneaux 12 et 22 de la dalle 1', cette dernière étant rendue plus élastique de manière uniforme.

Par conséquent, ce traitement permet de diminuer de manière importante la rigidité dynamique de la dalle 1' et donc d'améliorer l'affaiblissement des bruits d'impact. La dalle 1' finalement obtenue conserve ainsi ses caractéristiques d'isolation acoustique.

De même que précédemment, on notera que les plots 5 ne sont pas affectés par le traitement d'élastification, le retrait de la matrice 11 de la presse ne modifiant pas leur forme.

On notera qu'on ne sortirait pas du cadre de la présente invention en solidarisant le premier panneau 12 avec le second 22 par des moyens adhésifs, chaque panneau 12, 22 étant obtenu par moulage, et l'ensemble constitué par les deux panneaux 12 et 22 étant élastifié.

Quant au film 4, il améliore, d'une part, la tenue mécanique de la dalle 1' et, d'autre part, son isolation acoustique en empêchant les infiltrations dans ladite dalle 1', comme indiqué dans le premier mode de réalisation.

Il convient toutefois de remarquer que la dalle 1' correspondant au second mode de réalisation selon l'invention pourrait ne pas comporter de film 4 intimement lié au panneau 12. Dans ce cas, ledit ou chaque panneau 12 de la dalle 1' serait obtenu par un procédé de moulage avant d'être élastifié.

On notera encore que le traitement d'élastification appliqué à la dalle 1 ou 1' pourrait également être effectué par l'intermédiaire d'une contre-presse comportant une contre-matrice (non représentée), laquelle serait prévue pour être appliquée en même temps que ladite matrice 11 sous ladite face 7 de la dalle 1, 1' qui n'est pas prévue pour recevoir le dispositif de chauffage et/ou de rafraîchissement. Dans ce dernier cas, la partie active de ladite contre-matrice présenterait une forme complémentaire à celle de ladite face 7.

## Revendications

1. Dalle d'isolation (1, 1') pour un plancher pourvu d'un dispositif de chauffage et/ou de rafraîchissement, ladite dalle (1, 1') étant destinée à assurer l'isolation thermique et acoustique dudit plancher et étant constituée d'au moins un panneau (2, 12, 22), l'un des panneaux (2, 12, 22) comportant des plots (5) prévus pour recevoir ledit dispositif de chauffage et/ou de rafraîchissement, caractérisée en ce que ledit ou chaque panneau (2, 12, 22) est élastifié.

2. Dalle d'isolation (1, 1') selon la revendication 1, caractérisée en ce qu'au moins sa face (3) qui est formée pour recevoir ledit dispositif est en contact étroit avec un film imperméable isolant thermique (4) la recouvrant.

3. Dalle d'isolation (1, 1') selon la revendication 1 ou 2, caractérisée en ce que chaque plot (5) présente une partie incurvée (5d) en contre-dépouille qui est prévue pour recevoir ledit dispositif de chauffage et/ou de rafraîchissement, lequel est destiné à être logé entre deux plots (5) adjacents.

4. Dalle d'isolation (1, 1') selon la revendication 3, caractérisée en ce que chaque plot (5) comporte des moyens (5h, 5i) pour pouvoir déformer vers sa partie interne ladite partie incurvée (5d) en contre-dépouille.

5. Dalle d'isolation (1, 1') selon la revendication 4, caractérisée en ce que lesdits moyens (5h, Si) sont constitués d'au moins un évidemment par exemple deux rainures pratiquées de manière diamétrale sur la face supérieure (5g) de chaque plot (5).

6. Procédé de fabrication d'une dalle d'isolation (1) destinée à assurer l'isolation thermique et acoustique d'un plancher et comportant des plots (5) prévus pour recevoir un dispositif de chauffage et/ou de rafraîchissement, caractérisé en ce qu'il consiste à mouler en un matériau thermoplastique alvéolaire, un panneau (2) dont une face comporte lesdits plots (5), puis à soumettre ledit panneau (2) à un traitement d'élastification par compression.

7. Procédé de fabrication d'une dalle d'isolation (1') destinée à assurer l'isolation thermique et acoustique d'un plancher et comportant des plots (5) prévus pour recevoir un dispositif de chauffage et/ou de rafraîchissement, caractérisé en ce qu'il consiste à mouler en un matériau thermoplastique alvéolaire un premier panneau (12) dont une face comporte lesdits plots (5), à mouler sur ledit premier panneau (12) un second panneau (22) constitué du même matériau que ledit premier panneau (12), puis à soumettre l'ensemble constitué par lesdits deux panneaux (12 et 22) à un traitement d'élastification par compression.

8. Procédé de fabrication d'une dalle d'isolation (1, 1') selon la revendication 6 ou 7, caractérisé en ce que la première étape de moulage dudit panneau (2) ou dudit premier panneau (12) consiste à mouler ledit panneau (2) ou ledit premier panneau (12) sur un film (4) thermoplastique, de telle manière que ledit film (4) présente la forme de ladite face (3) de la dalle (1, 1') qui est prévue pour recevoir ledit dispositif de chauffage et/ou de rafraîchissement.

9. Dispositif de compression pour la mise en oeuvre du traitement d'élastification selon l'une des revendications 6 à 8, caractérisé en ce qu'il comprend une presse comportant une matrice (11) prévue pour comprimer ledit ou chaque panneau (2, 12, 22) de la dalle (1, 1'), la partie active (11a) de ladite matrice (11) présentant une forme complémentaire à celle de ladite face (3) de la dalle (1, 1') qui est prévue pour recevoir ledit dispositif de chauffage et/ou de rafraîchissement,

10. Dispositif de compression selon la revendication 9, caractérisé en ce qu'il comprend également une contre-presse comportant une contre-matrice prévue pour comprimer ledit ou chaque panneau (2, 12, 22) de la dalle (1, 1') en même temps que ladite matrice (11), la partie active de ladite contre-matrice présentant une forme complémentaire à celle de la face (7) de la dalle (1, 1') qui n'est pas prévue pour recevoir ledit dispositif de chauffage et/ou de rafraîchissement.
